# EUROPÄISCHE PATENTANMELDUNG

(11) **EP 2 910 362 A1**
(43) Veröffentlichungstag der Anmeldung: **26.08.2015**
(21) Anmeldenummer: 15152812.2
(22) Anmeldetag: 28.01.2015
(51) Int. Cl.: B29C 67/00, B33Y 10/00, B33Y 40/00, B29C 35/16

(54) **Pulverbett-basiertes additives Herstellungsverfahren, bei dem eine Stützstruktur zur Herstellung des Bauteils verwendet wird**

(30) Priorität: 25.02.2014 DE 102014203386
(71) Anmelder: Siemens Aktiengesellschaft, 80333 München (DE)
(72) Erfinder: Küsters, Yves, 10829 Berlin (DE); Schäfer, Martin, 10557 Berlin (DE)

(57) **Zusammenfassung**

Ein Pulverbett-basiertes additives Herstellungsverfahren, insbesondere das Laserschmelzen ist offenbart. Hierbei kommt eine Stützstruktur (15a, 15b, 15c) zum Einsatz, die im Pulverbett (13) vorgesehen ist und eine mechanische Stabilisierung sowie Wärmeableitung aus dem in Entstehung befindlichem Bauteil (12) bewirkt. Erfindungsgemäß ist vorgesehen, dass die Stützstrukturen (15a, 15b, 15c) baumartig aufgebaut sind. Die Wärme kann dann über die Verzweigung (18b) großflächig aus dem Bauteil (12) abgeführt werden und über den Stamm (17) in thermisch unkritische Bereiche abgeleitet werden. Die baumartige Struktur der Stützstrukturen (15a, 15b, 15c) erleichtert deren geometrische Gestaltung sowie das Entfernen der Stützstrukturen nach erfolgter Herstellung des Bauteils (12).

## Beschreibung

Die Erfindung betrifft ein Pulverbett-basiertes additives Herstellungsverfahren. Bei diesem wird ein Pulver, aus dem das Bauteil hergestellt werden soll, lagenweise als Pulverbett auf eine Bauplattform aufgebracht. Das Bauteil wird anschließend durch lokales Aufschmelzen des Pulvers lagenweise hergestellt. Zusammen mit dem Bauteil wird eine Stützstruktur hergestellt, die den bis dahin hergestellten Teil des Bauteils an Stützstellen berührt.

Ein Verfahren der eingangs angegebenen Art ist beispielsweise aus der DE 10 2010 041 461 A1 bekannt. Pulverbett-basierte additive Herstellungsverfahren werden dazu verwendet, um aus einem CAD-Datensatzbauteile aus einem Pulver aufschmelzbaren Materials direkt herzustellen. Auf diesem Wege lassen sich beispielsweise Prototypen oder auch Kleinserien von Bauteilen verwirklichen. Hierbei ist es erforderlich, bei komplexeren Bauteilgeometrien Stützstrukturen zu verwenden, welche einerseits eine Verbindung zwischen der Bauplattform der Herstellungsanlage und dem in Herstellung befindlichen Bauteil erzeugen. Außerdem dienen die Stützstrukturen einer Wärmeabfuhr aus dem in Herstellung befindlichen Bauteil. Nach Herstellung des Bauteils müssen die Stützstrukturen sowohl von dem Bauteil als auch von der Bauplattform entfernt werden.

Wenn aus fertigungstechnischen Gründen, beispielsweise aufgrund der Komplexität der herzustellenden Bauteile, eine vergleichsweise große Wärmeabfuhr aus dem herzustellenden Bauteil notwendig ist, müssen entsprechend viele Stützstrukturen an der Oberfläche des in Herstellung befindlichen Bauteiles angreifen. Hierbei können insbesondere bei Bauteilen mit einer komplexen Geometrie Probleme auftreten, die mit der Entfernung der Vielzahl von Stützstrukturen verbunden ist.

Die in Herstellung befindlichen Bauteile werden bei dem additiven Herstellungsverfahren Schicht für Schicht aufgebaut. Auf einer Bauplattform wird zunächst eine Lage eines Pulvers aus dem Material des herzustellenden Bauteils aufgebracht. Dieses Material wird durch einen Energiestrahl, wie einen Elektronenstrahl oder einen Laser, lokal an den Stellen aufgeschmolzen, wo das herzustellende Bauteil entstehen soll. Das herzustellende Bauteil ist durch den CAD-Datensatz definiert. Nach Aufschmelzen der betreffenden Pulverpartien folgen nach und nach weitere Lagen des Pulvers, die jeweils ebenfalls lokal aufgeschmolzen werden, bis das Bauteil fertiggestellt ist.

Bei der Herstellung des Bauteils entsteht das Problem, dass die Prozesswärme aus dem in Entstehung befindlichen Bauteil abgeführt werden muss. Um während der Herstellung des Bauteils übermäßige Verformungen aufgrund von Wärmedehnungen zu vermeiden, werden Stützstrukturen an dem Bauteil angebracht, die ebenfalls im Pulverbett hergestellt werden. Diese verbinden insbesondere die Bauteiloberfläche mit der Bauplattform, wodurch Verformungen des Bauteils aufgrund von Wärmedehnungen entgegengewirkt wird. Außerdem dienen die Stützstrukturen auch einer höheren Wärmeabfuhr aus dem in Entstehung befindlichen Bauteil, da diese massiven Stützstrukturen die Wärme besser vom Bauteil ableiten, als das an der Oberfläche des Bauteils anliegende Pulver.

Die Aufgabe der Erfindung liegt darin, ein Pulverbett-basiertes additives Herstellungsverfahren anzugeben, mit dem einerseits eine zuverlässige Wärmeabfuhr aus dem Bauteil möglich ist und die nach Abschluss des Verfahrens einfach vom Bauteil und der Bauplattform entfernt werden kann.

Diese Aufgabe wird mit dem eingangs angegebenen Herstellungsverfahren erfindungsgemäß dadurch gelöst, dass die Stützstruktur baumartig ausgebildet ist und Verzweigungen aufweist, welche an ihren Enden die Stützstellen am Bauteil berühren. Stellt man sich als Stützstruktur also einen Baum vor, so ist erfindungsgemäß vorgesehen, dass die Äste mit ihren Spitzen die Oberfläche des Bauteils berühren und der Stamm dieser Struktur vom Bauteil abragt. Hierdurch ist vorteilhaft gewährleistet, dass die Wärmeabfuhr aus der Bauteiloberfläche an mehreren Stellen gleichzeitig erfolgt. Dies ist erforderlich, um eine effektive Wärmeabfuhr zu erreichen. Um diese auch von der Bauteiloberfläche wegtransportieren zu können, werden die an der Oberfläche des Bauteils angreifenden Verzweigungen zusammengeführt, wodurch die baumartige Struktur entsteht. Die Verzweigungen einer Stützstruktur werden letztendlich in einem Stamm zusammengeführt. Anders ausgedrückt besteht die baumartige Struktur aus einem Stamm, der sich einmal oder mehrfach in die Verzweigungen aufteilt, wobei die Verzweigungen an der Bauteiloberfläche enden.

Die baumartige Struktur gewährleistet einerseits, dass die Stützstruktur an mehreren Stellen die Bauteiloberfläche berührt, wobei diese Stützstellen über die Oberfläche verteilt sind. Hierdurch kann die Wärme auch aus einem größeren Areal der Bauteiloberfläche zuverlässig abgeführt werden. Außerdem vereinigen sich die Verzweigungen mit zunehmender Entfernung von der Bauteiloberfläche zu einem Stamm, sodass in diesem Bereich des Pulverbettes eine vergleichsweise einfache Struktur der Stützstruktur vorliegt. Dies ermöglicht eine vereinfachte Abtrennung der Stützstruktur nach erfolgter Herstellung des Bauteils. Dadurch, dass nicht jede Verzweigung eine eigene Stützstruktur darstellt, ist nämlich die Erreichbarkeit der Verzweigungen für ein geeignetes Werkzeug zum Abtrennen verbessert, was sich insbesondere bei komplexen Bauteilgeometrien vorteilhaft auswirkt.

Gemäß einer vorteilhaften Ausgestaltung der Erfindung ist vorgesehen, dass die Stützstruktur sich mit ihrem Stamm auf der Bauplattform abstützt. Dies ist von Vorteil, wenn die Stützstruktur gleichzeitig Relativbewegungen zwischen dem in Herstellung befindlichem Bauteil und der Bauplattform verhindern oder zumindest verringern soll. Die Kraft kann dann über die Verzweigungen in den Stamm eingeführt werden und Verformungen des in Herstellung befindlichen Bauteils aufgrund lokaler Erwärmungen können auf diesem Wege verringert werden. Andererseits ist vorteilhaft die Trennung der entsprechenden Stützstruktur von der Bauplattform vereinfacht, da nur der Stamm an seiner Berührungsstelle zur Bauplattform getrennt werden muss.

Gemäß einer alternativen Ausgestaltung der Erfindung ist vorgesehen, dass die Stützstruktur sich mit ihrem Stamm auf einer bereits hergestellten Region des Bauteils abstützt. Hierdurch ist es vorteilhaft möglich, bei größeren Bauteilen oder Bauteilen mit komplexer Geometrie, wie z.B. Hinterschneidungen, eine Wärmeabfuhr zu gewährleisten. In den genannten Fällen ist es nur noch eingeschränkt möglich, die Wärme bis zur Bauplattform zu führen. Erfolgversprechender ist es, für den Stamm eine Berührungsstelle auf dem bereits hergestellten Bauteil zu wählen. Diese ist zu diesem Zeitpunkt üblicherweise schon abgekühlt, da sie in einer früheren Phase des additiven Herstellungsverfahrens hergestellt wurde. Die Wärme kann insofern aus gerade in Herstellung befindlichen Regionen des Bauteils in die bereits hergestellten Regionen abgeführt werden. Dabei können die Wege der Wärmeleitung vorteilhaft kurz gehalten werden. Außerdem lassen sich mit den Stützstrukturen Verformungen der in Herstellung befindlichen Regionen des Bauteils bezüglich bereits hergestellter Regionen des Bauteils vermindern.

Gemäß einer anderen Ausgestaltung der Erfindung ist vorgesehen, dass mit der Stützstruktur seitlich an der Wand des sich ausbildenden Bauteils Stützstellen ausgebildet werden. Die baumartige Struktur der Stützstrukturen hat nämlich den zusätzlichen Vorteil, dass diese in ihrer Geometrie sehr variabel ausgebildet werden können. So können sich die Verzweigungen auch seitlich vom Stamm weg erstrecken, so dass eine senkrechte Ausrichtung der Stützstrukturen zur Bauplattform nicht erforderlich ist. Andererseits kann die Wärme von den Verzweigungen über den Stamm auch bei der Herstellung von senkrechten Bauteiloberflächen in die Bauplattform erfolgen, die aufgrund ihrer Masse vorteilhaft eine hohe Wärmekapazität zur Wärmeabfuhr aus dem Bauteil zur Verfügung stellt.

Gemäß einer wieder anderen Ausgestaltung der Erfindung ist vorgesehen, dass die Stützstruktur unterhalb eines Überhanges des herzustellenden Bauteils angeordnet ist. Hierdurch kann vorteilhaft erreicht werden, dass der Übergang sich weniger verformen kann, wenn in diesem lokale Erwärmungen aufgrund der Herstellung mittels des Laserstrahls entstehen. Mit anderen Worten kann durch die baumartige Stützstruktur, die beispielsweise die Bauplattform mit dem Überhang verbindet, der Abstand konstant gehalten werden. Gleichzeitig kann eine Wärmeabfuhr aus dem Bauteilüberhang auf dem kürzest möglichem Wege in beispielsweise die Bauplattform erfolgen. Statt die Stützstruktur auf die Bauplattform zu führen, kann diese, wie bereits erwähnt, auch mit bereits hergestellten Regionen des Bauteils verbunden sein.

Gemäß einer besonderen Ausgestaltung der Erfindung ist vorgesehen, dass die Stützstruktur Verzweigungen aufweist, die im Pulverbett enden. Diese dienen somit nicht der Stützung des Bauteils sondern der Verteilung der Wärme im Pulverbett. Dieses ist selbst an sich schlecht wärmeleitend. Jedoch kann durch eine Verzweigung der Stützstruktur mit Enden im Pulverbett erreicht werden, dass die Oberfläche der Stützstruktur vergrößert wird und auf diese Weise im Pulverbett eine größere Wärmeübergangsfläche zur Verfügung steht. Andererseits wird die Wärme aus dem Pulverbett nur in geringem Maße zur Bauteiloberfläche zurücktransportiert, da das Pulverbett im Vergleich zur Stützstruktur schlecht wärmeleitend ist. Vorteilhaft kann das Pulverbett als Wärmespeicher insbesondere in den Fällen verwendet werden, wo aufgrund der Größe des herzustellenden Bauteils die Bauplattform bereits zu weit von dem in Herstellung befindlichem Teil des Bauteils entfernt ist.

Vorteilhaft kann auch vorgesehen werden, dass der Stamm der Stützstruktur an dem den Verzweigungen gegenüberliegenden Ende Wurzeln aufweist die zumindest teilweise im Pulverbett enden. Der Wärmeübergangsmechanismus ist hier derselbe, wie bei den Verzweigungen, die im Pulverbett enden. Allerdings wird die Wärme bei dieser Ausgestaltung der Erfindung über den Stamm geführt und endet in den Wurzeln. Die Wurzeln dienen also der Oberflächenvergrößerung der Grenzfläche zum Pulverbett, um den Wärmeübergang zu verbessern. Auch diese Maßnahme kann ergriffen werden, wenn die Bauplattform zu weit entfernt ist. Allerdings kann ein Teil der Wurzeln auch mit der Bauplattform oder bereits erzeugten Partien des Bauteils verbunden sein, um zusätzlich eine Wärmeabfuhr und eine mechanische Stützung zu erreichen.

Weiterhin ist es vorteilhaft, wenn die Stützstruktur mindestens zwei Verzweigungsebenen aufweist. Als Verzweigungsebene im Sinne der Erfindung soll der Bereich der Stützstruktur verstanden werden, in dem sich die Verzweigungen jeweils das erste Mal, das zweite Mal oder das n-te mal verzweigen. Der Stamm ist in diesem Sinne sozusagen die nullte Verzweigungsebene. Durch Vorsehen von mindestens zwei Verzweigungsebenen ist es vorteilhaft möglich die Verzweigungen über ein genügend großes Areal der Oberfläche des Bauteils zu verteilen. Vorteilhaft ist es auch, wenn insgesamt mindestens acht Verzweigungen in der Stützstruktur vorgesehen sind, die in Stützstellen enden. Werden beispielsweise zwei Verzweigungsebenen vorgesehen, ist es möglich, dass sich der Stamm einmal teilt und die so entstehenden beiden Verzweigungen der ersten Verzweigungsebene in der zweiten Verzweigungsebene jeweils vier Verzweigungen aufweisen. Hierdurch ist es möglich die Verzweigungen auf ein genügend großes Areal der Bauteiloberfläche zu verteilen.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Es zeigen:
- Figur 1 und 2: Ausführungsbeispiele des erfindungsgemäßen Herstellungsverfahrens, bei denen Stützstrukturen unterschiedlicher Geometrie hergestellt werden und
- Figur 3: schematisch Verzweigungsebenen einer baumartigen Stützstruktur, die mit einem Ausführungsbeispiel des erfindungsgemäßen Verfahrens hergestellt werden kann.

Das erfindungsgemäße Verfahren kann mit handelsüblichen Anlagen zum additiven Herstellen von Bauteilen durchgeführt werden. Beispielsweise kann eine Anlage zum Laserschmelzen der Fa. EOS GmbH verwendet werden. Diese bietet unter dem Handelsnamen EOSINT M 280 eine solche Anlage an. Die handelsüblichen Anlagen beispielsweise zum Laserschmelzen müssen nicht modifiziert werden sondern können das Verfahren durch Verwendung geeigneter CAD-Datensätze für das erfindungsgemäße Verfahren vorbereitet werden.

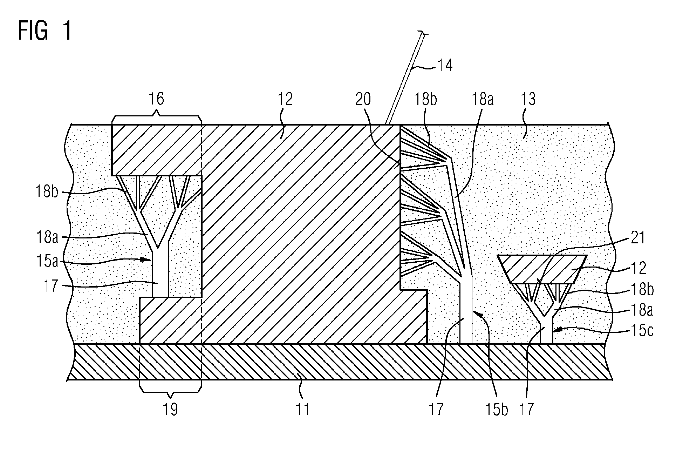

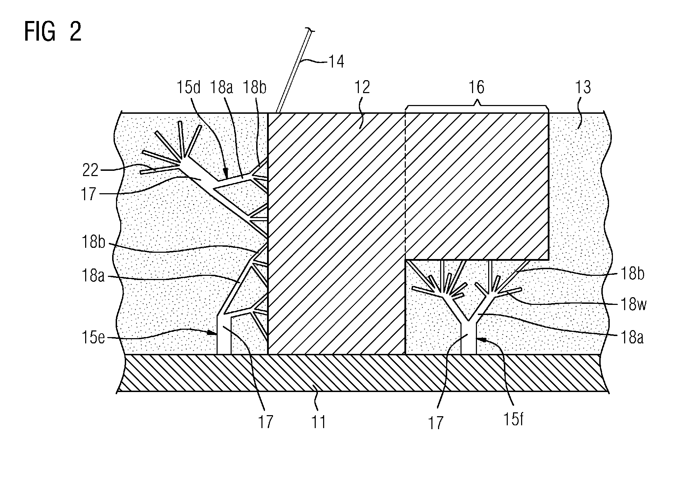

In den Figuren 1 und 2 ist von einer solchen handelsüblichen Anlage zum Laserschmelzen lediglich eine Bauplattform 11 dargestellt, die als Unterlage für herzustellende Bauteile 12 dient. Zu diesem Zweck wird in nicht näher dargestellter Weise lagenweise ein Pulverbett 13 aufgebracht, welches durch einen Laserstrahl 14 im Bereich des in Herstellung befindlichen Bauteils 12 aufgeschmolzen wird.

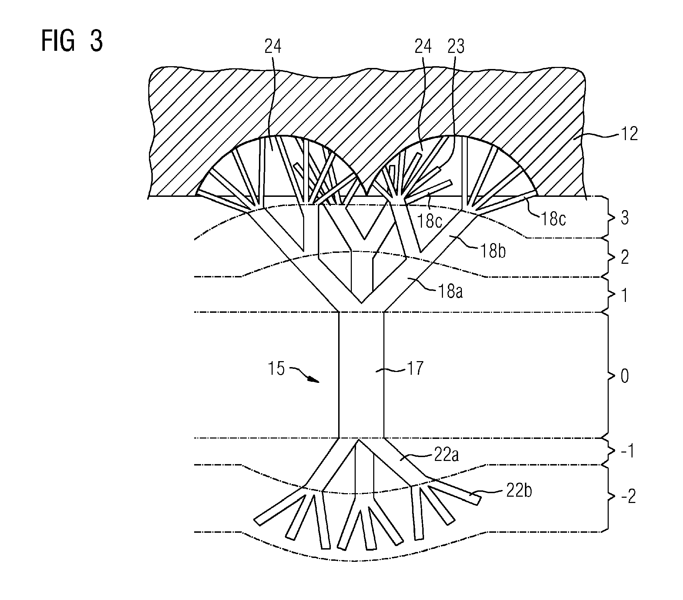

Durch den Laser 14 wird Wärme in das in Entstehung befindliche Bauteil eingeleitet, welche nach Erstarren des Materials des Bauteils zu Wärmedehnungen und daraus folgend auch zu Verformungen des in Entstehung befindlichen Bauteils führt. Um die Maßhaltigkeit des Bauteils zu gewährleisten, dürfen hinsichtlich der Wärmedehnung bestimmte Grenzen nicht überschritten werden. Zu diesem Zweck werden in dem Pulverbett 13 parallel zum Bauteil 12 Stützstrukturen 15, 15a, 15b, 15c, 15d, 15e und 15f (siehe auch Figuren 2 und 3) hergestellt. Hierbei sind unterschiedliche Modifikationen möglich.

Die Stützstrukturen 15a, 15b, 15c, 15d, 15e und 15f weisen jeweils einen Stamm 17 auf, der sich jeweils zweimal nacheinander verzweigt (zu den hierdurch entstehenden Verzweigungsebenen im Folgenden mehr). Der Stamm 17 mündet in die Verzweigungen 18a, wobei sich diese Verzweigungen 18a nochmal in Verzweigungen 18b aufteilen.

Die Stützstruktur 15a gemäß Figur 1 stützt einen Bereich des Bauteils 12, der einen Überhang 16 bildet. Dieser ist aufgrund der Bauteilgeometrie stärker gefährdet, unzulässig hohe Wärmedehnungen zu erfahren, als der massive Grundkörper des Bauteils 12. Mit dem Stamm 17 fußt die Stützstruktur 18a auf einem Absatz 19 des Bauteils 12. Dieser liegt in einer höheren Ebene als die Bauplattform 11. Daher kann der Stamm 17 kürzer ausgebildet werden, wodurch die Stützstruktur 18a einerseits steifer wird, andererseits die Wärme schneller in den massiven Absatz 19 des Bauteils eingeleitet werden kann. Dieser Teil des Bauteils ist nach seiner Herstellung bereits abgekühlt, da genug Zeit seit der Herstellung dieser Partie des Bauteils vergangen ist. Die Einleitung von Wärme über die Stützstruktur 15a ist daher unschädlich für das zu erreichende Herstellungsergebnis.

Mit den Verzweigungen 18b greift die Stützstruktur 15a an die Unterseite des Überhanges 16 an. Die Wärme kann daher aus dem in Entstehung befindlichen Überhang 16 nach unten in das Pulverbett abgeleitet werden. Durch die Vielzahl der Verzweigungen ist auch eine großflächige Wärmeableitung möglich.

Die Stützstruktur 15b gemäß Figur 1 fußt auf der Bauplattform 11. Sie ist seitlich von dem Bauteil 12 angebracht, wodurch es möglich wird, Wärme aus einer Seitenfläche 20 des Bauteils 12 auszuleiten. Hierbei wird eine Geometrie der Stützstruktur gewählt, bei der der Stamm 17 auf der Bauplattform 11 fußt und parallel zur Seitenfläche 20 des Bauteils 12 verläuft. Letztere ist senkrecht zur Bauplattform 11 ausgerichtet. Die Verzweigungen 18a, die vom Stamm 17 abgehen, neigen sich schräg zur Seitenfläche 20 hin und von diesen Verzweigungen 18a gehen Verzweigungen 18b aus, welche zur Seitenfläche 20 hin ausgerichtet sind und das Bauteil an der Seitenfläche stützen. Eine solche Stützstruktur ist weniger steif als beispielsweise die Stützstruktur 15a. Diese dient daher mehr der Wärmeabfuhr als der Stützung des Bauteils, wobei die Verformungen des Bauteils 12 im Bereich der Seitenfläche 20 als unkritisch zu bewerten ist.

Eine andere Stützstruktur 15c gemäß Figur 1 stützt ein anderes Bauteil 12. Hierbei handelt es sich um eine Stützstruktur, die mit ihrem Stamm 17 auf der Bauplattform 11 hergestellt wird, bevor überhaupt mit der Herstellung des Bauteils 12 begonnen wird. Das Bauteil 12 wird mit seiner Basisfläche 21 direkt auf den Verzweigungen 18b der Stützstruktur 15c hergestellt. Auf diese Weise ist eine zuverlässige Wärmeabfuhr aus dem Bauteil 12 möglich, ohne dass dieses mit seiner Basisfläche 21 auf der Bauplattform 11 aufliegt. Daher ist insbesondere die Trennung des Bauteils nach erfolgter Herstellung einfacher, da lediglich die Verzweigungen 18b von dem Bauteil getrennt werden müssen und nicht die gesamte Basisfläche 21.

In Figur 2 sind weitere Stützstrukturen zu erkennen. Die Stützstruktur 15e entspricht funktional der Stützstruktur 15b, weswegen sich weitere Erläuterungen erübrigen. Das Bauteil 12 gemäß Figur 2 ist allerdings höher ausgebildet als dasjenige in Figur 1. Daher ist eine Wärmeabfuhr mittels der Stützstruktur 15e, die auf die Bauplattform 11 fußt, nicht mehr zuverlässig möglich. Stattdessen wird die Stützstruktur 15d eingesetzt, welche mit ihren Verzweigungen 18b ebenfalls an dem Bauteil 12 angreift. Allerdings wird der Stamm 17 der Stützstruktur 15d nicht mit einem anderen Bauteilbereich oder der Bauplattform 11 verbunden sondern endet mitten im Pulverbett 13. An diese Stelle des Stammes sind allerdings Wurzeln 22 angeschlossen, die vom strukturellen Aufbau den Verzweigungen entsprechen, jedoch am anderen Ende des Stammes sitzen. Nicht dargestellt, jedoch ohne weiteres möglich, wäre es, die Wurzeln sich ebenfalls verzweigen zu lassen. Die Wurzeln 22 führen vorteilhaft dazu, dass die durch den Stamm 17 geleitete Wärme über die Wurzeln 23 im Pulverbett verteilt werden kann, sodass die geringere Wärmekapazität und Wärmeleitfähigkeit des Pulvers optimal ausgenutzt werden kann. Daher gelingt mit der Stützstruktur 15d eine Wärmeabfuhr aus dem Bauteil 12 auch in Bereichen, in denen die Stützstruktur weit entfernt von einer massiven Stützstelle (Bauteil 12 oder Bauplattform 11) entfernt ist. Die Stützwirkung einer solchen Stützstruktur ist allerdings weniger stark ausgeprägt als deren Wärmeleiteigenschaften.

Die Stützstruktur 15f gemäß Figur 2 ist im Wesentlichen mit der Stützstruktur 15a vergleichbar. Allerdings fußt der Stamm 17 nicht auf einen anderen Bauteilbereich, sondern direkt auf die Bauplattform 11. Die Stützfunktion wird allerdings ebenfalls für einen Überhang 16 des Bauteils 12 verwendet.

Die Stützstruktur 18a weist außerdem eine besondere Art von Verzweigungen 18w auf, die ähnlich wie die Wurzeln 22 nicht an der Oberfläche des Bauteils 12 angreifen, sondern im Pulverbett enden. Diese Verzweigungen 18w haben auch eine mit den Wurzeln vergleichbare Funktion. Sie erleichtern einen Wärmeübergang von den Verzweigungen in das Pulverbett, wodurch ein Teil der aus dem Bauteil 12 abgeleiteten Wärme nicht über den Stamm 17 in die Bauplattform 11 eingeleitet werden muss, sondern bereits in das Pulverbett eingeleitet werden kann. Hierbei können kürzere Wege realisiert werden, wodurch die Effektivität der Wärmeableitung gesteigert wird.

Anhand von Figur 3 kann die Struktur einer Stützstruktur mit ihren Verzweigungen und Wurzeln nachvollzogen werden. Die Stützstruktur 15 ähnelt der Stützstruktur 15d gemäß Figur 2. Die für die Stützstruktur 15 geltenden Aussagen lassen sich aber auch auf die anderen Stützstrukturen 15a, 15b, 15c, 15e und 15f übertragen. Hierzu ist zu bemerken, dass aufgrund fachmännischer Überlegungen die Strukturen der vorgestellten Stützstrukturen untereinander je nach den Erfordernissen des Anwendungsfalles auch miteinander kombiniert werden können. Auch die Anzahl der Verzweigungen und Wurzeln kann an den gegebenen Anwendungsfall ohne Weiteres angepasst werden.

Die Stützstruktur 15 weist einen Stamm 17 auf, der selbst unverzweigt ist. Deswegen kann man den Stamm 17 auch die Verzweigungsebene 0 zuordnen. Als Ebenen im Sinne der Erfindung sind nicht Ebenen im geometrischen Sinne gemeint, sondern diejenigen Bereiche des in Figur 3 nicht näher dargestellten Pulverbettes, in der sich jeweils die Verzweigungen bzw. Wurzeln mit derselben Verzweigungstiefe oder der Stamm der Stützstruktur befinden.

Wie zu erkennen ist, verzweigt sich der Stamm 17 in der Verzweigungsebene 1 in drei Verzweigungen 18a. Hier ist auch zu erkennen, dass einer der drei Verzweigungen 18a in die Zeichenebene hineinragt, da die Stützstruktur auch eine dreidimensionale Ausdehnung haben kann. Dies ist in den Figuren 1 und 2 aus Zwecken der Einfachheit der Darstellung weggelassen worden, wobei auch diese Stützstrukturen grundsätzlich dreidimensional ausgebildet sein können. Da in den Figuren 1 und 2 im Unterschied zur Figur 3 auch das Pulverbett 13 dargestellt ist, sind die Teile der Stützstrukturen hinter der Zeichenebene aber ohnehin nicht zu erkennen, da sie im Pulverbett verschwinden.

In der Verzweigungsebene 2 verzweigen sich die Stützstrukturen ein weiteres Mal. Hier sind pro Verzweigung 18a je zwei Verzweigungen 18b vorgesehen. In der Verzweigungsebene 3 sind dann pro Verzweigung 18b vier Verzweigungen 18c vorgesehen. Diese Verzweigungen 18c treffen an Stützstellen 23 die Oberfläche des Bauteils 12. Dies ist besonders gut an den Verzweigungen 18c hinter der Zeichenebene zu erkennen. Die Oberfläche des dargestellten Bauteils 12 weist in Figur 3 zwei Vertiefungen 24 auf, in der die Stützstruktur 15 angreift.

Am anderen Ende des Stammes 17 sind in der Verzweigungsebene -1 Wurzeln 22a vorgesehen. Diese verzweigen sich in Wurzeln 22b in einer Verzweigungsebene -2. Hierdurch wird eine Oberflächenvergrößerung zum nicht dargestellten Pulverbett erreicht, sodass eine Wärmeleitung von dem Bauteil 12 über die Verzweigungen 18c, 18b und 18a in den Stamm 17 und aus dem Stamm 17 in die Wurzeln 22a und 22b und von dort in das Pulverbett möglich ist.

Aus Figur 3 wird auch deutlich, dass der Querschnitt der einzelnen Verzweigungen von niedrigen Verzweigungsebenen zu hohen Verzweigungsebenen abnimmt. Genauso verhält es sich mit den Wurzeln 22a, 22b, wobei der Querschnitt der Verzweigungsebene -1 noch größer ist als derjenige in Verzweigungsebene - 2. Vorzugsweise ist der Gesamtquerschnitt der Stützstruktur in jeder Verzweigungsebene gleich. Vorteilhaft kann auch vorgesehen werden, dass der Gesamtquerschnitt in den Verzweigungsebenen mit kleinerer Nummerierung zunimmt, wodurch ein zusätzliches Wärmereservoir für thermische Belastungsspitzen geschaffen wird.

## Patentansprüche

1. Pulverbett-basiertes additives Herstellungsverfahren, bei dem
- das Pulver, aus dem ein Bauteil (12) hergestellt werden soll lagenweise als Pulverbett (13) auf eine Bauplattform (11) aufgebracht wird,
- das Bauteil (12) durch lokales Aufschmelzen des Pulvers lagenweise hergestellt wird und
- zusammen mit dem Bauteil (12) eine Stützstruktur (15, 15a, 15b, 15c, 15d, 15e, 15f) hergestellt wird, die den bis dahin hergestellten Teil des Bauteils (12) an Stützstellen (23) berührt,
- wobei die Stützstruktur (15, 15a, 15b, 15c, 15d, 15e, 15f) baumartig ausgebildet ist und ausgehend von einem Stamm (17) Verzweigungen (18a, 18b) aufweist, welche an ihren Enden die Stützstellen (23) am Bauteil (12) berühren
**dadurch gekennzeichnet,**
**dass** die Stützstruktur Verzweigungen (18w) aufweist, die im Pulverbett (13) enden.

2. Herstellungsverfahren nach Anspruch 1,
**dadurch gekennzeichnet,**
**dass** die Stützstruktur (15, 15a, 15b, 15c, 15d, 15e, 15f) sich mit ihrem Stamm (17) auf der Bauplattform (11) abstützt.

3. Herstellungsverfahren nach Anspruch 1,
**dadurch gekennzeichnet,**
**dass** die Stützstruktur (15, 15a, 15b, 15c, 15d, 15e, 15f) sich mit ihrem Stamm (17) auf einer bereits hergestellten Region des Bauteils (12) abstützt.

4. Herstellungsverfahren nach einem der voranstehenden Ansprüche,
**dadurch gekennzeichnet,**
**dass** mit der Stützstruktur (15, 15a, 15b, 15c, 15d, 15e, 15f) seitlich an der Wand des sich ausbildenden Bauteils (12) Stützstellen (23) ausgebildet werden.

5. Herstellungsverfahren nach einem der voranstehenden Ansprüche,
**dadurch gekennzeichnet,**
**dass** die Stützstruktur (15, 15a, 15b, 15c, 15d, 15e, 15f) unterhalb eines Überhanges (16) des herzustellenden Bauteils (12) angeordnet wird.

6. Herstellungsverfahren nach einem der Ansprüche 1 oder 4 bis 5,
**dadurch gekennzeichnet,**
**dass** der Stamm (17) der Stützstruktur (15, 15a, 15b, 15c, 15d, 15e, 15f) am den Verzweigungen (18a, 18b) gegenüberliegenden Ende Wurzeln (22) aufweist, die zumindest teilweise im Pulverbett (13) enden.

7. Herstellungsverfahren nach einem der voranstehenden Ansprüche,
**dadurch gekennzeichnet,**
**dass** die Stützstruktur (15, 15a, 15b, 15c, 15d, 15e, 15f) mindestens zwei Verzweigungsebenen (1, 2, 3) ausweist.

8. Herstellungsverfahren nach einem der voranstehenden Ansprüche,
dass die Stützstruktur (15, 15a, 15b, 15c, 15d, 15e, 15f) mindestens acht Verzweigungen (18a, 18b) ausweist, die in Stützstellen (23) enden.
